# EUROPEAN PATENT APPLICATION

(11) **EP 2 564 953 A1**
(43) Date of publication of application: **06.03.2013**
(21) Application number: 11180001.7
(22) Date of filing: 05.09.2011
(51) Int. Cl.: B22D 17/00

(54) **Process for producing formed parts**

(71) Applicant: Rheinfelden Alloys GmbH & Co. KG, 79618 Rheinfelden (DE)
(72) Inventor: FRANKE, Rüdiger, 79539 Lörrach (DE)
(74) Representative: Rentsch Partner AG

(57) **Abstract**

In a process for producing formed parts made of an aluminum alloy, the aluminum alloy is exposed to high shearing forces in a mixing and kneading machine (30), having a housing (31) with a working space (34), which is surrounded by an inner housing sleeve (32), and a worm shaft (36), which rotates about a longitudinal axis (x) and oscillates along the longitudinal axis (x) in the inner housing sleeve (32) and is interrupted circumferentially to create individual kneading blades (38), with axial passage openings (40) between the kneading blades (38), and with kneading projections (42), which project from the inner housing sleeve (32), protrude into the working space (34) and pass through the axial passage openings (40), wherein liquid aluminum alloy is fed to the working space (34) at one end of the housing (31) and, at the other end of the housing (31), is removed from the working space (34) as partially solid aluminum alloy with a predefined solids content and is processed to formed parts, wherein the solids content of the aluminum alloy in the working space (34) is set to the predefined solids content by cooling and heating the working space (34) in a targeted manner.

## Description

The invention relates to a process for producing formed parts made of an aluminum alloy.

Die cast parts made of aluminum alloys are being used ever more frequently, inter alia, in the automotive industry for reasons of an increasing demand for weight reduction. For casting technology reasons, it is generally the case that a cast part wall thickness of about 2 mm cannot be undershot, for example in the case of nodes for space frame structures, with conventional die casting processes. The filling of the die casting mold with partially solid metal melts by using thixocasting or rheocasting leads to better filling of the mold and, as a result, to a possible further reduction in the cast part wall thickness to about 1 mm. As the wall thickness decreases, however, the reduced force-absorption capability increasingly becomes a limiting factor. This disadvantage by itself could be countered by the addition of nanoparticles to an aluminum alloy matrix. However, there is a lack of suitable processes for cost-effectively producing aluminum alloys reinforced with nanoscale particles and for the preparation thereof to form partially solid metal melts for die casting.

Above all in the automotive industry is a great demand for large, thin-walled castings, i. e. castings with at least one dimension greater than 1 m, such as front beams, A-pillars, shocktowers, side beams, rear beams, corner nodes or suspension parts or others, and with areas of a wall thickness to about 1 mm.

Casting processes, such as conventional high pressure die casting (HPDC), high vacuum pressure die casting (HVDC) and plaster-mold casting are suitable for making large, thin-walled castings, albeit maybe not of the structural properties desired.

Other processes, such as squeeze casting, low pressure permanent mold casting (LPPM), also called low pressure die casting, and precision sand casting are suitable for making structural parts, albeit not large and of the thinness desired.

The above-mentioned prior art processes and their deficiency in processing aluminum alloys are described below in detail.

High pressure die casting (HPDC) is globally the most productive and most widely used casting process for aluminum and magnesium. It is accomplished using inexpensive secondary alloys on very expensive die casting machines and in very robust steel tooling, making it suitable only for high-volume work that can spread high capital and tooling costs over many parts. Molten metal is injected at high velocities of more than 30 m/sec and high pressures of about 1000 bar, creating tremendous turbulence and entrapping any gases in the die cavity when the shot is made. Solidification of HPDCs progresses rapidly from the cast surface to the thermal center of cross sections, but is nearly impossible to control directionally through long dimensions of the part. Uniform thin sections can be reasonable sound surface to centerline, where porosity does usually occur, but natural liquid-to-solid solidification shrinkage does occur in thicker sections, especially those isolated by thin sections between them and the shot piston. Cavity gases that are admixed with flowing melt become entrapped and, while they can be compressed to small size and might appear to be insignificant, they prevent heat treatment or welding without parts blistering and they significantly weaken the material. HPDCs tend to have a very tough and dense as-cast surface skin that provides most of the strength and pressure-tightness of the full cross section, but removal of that skin during machining, often required for part function, typically reduces part strength by up to 50% and causes parts to leak if their service requires containing air, water or oil under even very low pressures of 2 to 3 bar. While large HPDC parts can indeed be thin, they cannot serve in structural applications.

High vacuum pressure die castings (HVDCs) are akin to HPDCs in almost every respect, the major difference being that high levels of vacuum drawn on the die cavity prior to and during the shot leaves little or no cavity gas to become entrapped during turbulent metal flow. HVDCs have fewer gas pores than HPDCs and can be heat treated without blistering. The HVDC concept is sound and HVDCs have been and still are used to produce large, thin-walled (3-4 mm) structural parts. The downside to HVDCs is that like HPDC, their dendritic structure does not facilitate feeding solidification shrinkage along longer dimensions and in thicker sections and using high vacuum requires costly sealing of die parting faces and around cores and slides, and prevents the use of many common die lubricants that could volatilize during the shot. Machines and tooling for the HVDC process is more expensive than that for HPDC and scrap rates tend to be high due to difficulties maintaining adequate vacuum and controlling shot parameters. HVDC generally requires the use of alloys having good fluidity, thus the Al-Si family is most popular; for structural applications, Silafont^{®} 36 works well. Such alloys, however, require full T6 or T7 heat treatment to achieve desired structural strength and ductility. Alloys like Magsimal^{®} 59 can also be cast, but are much more of a challenge; however that provide suitable structural properties without heat treatment. HVDCs have produced large thin-walled (3-4 mm) parts, but not in the 1-2 mm thickness range now being sought.

Precision plaster-molded parts are used in the aerospace industry and other applications requiring large, thin-walled parts; however, those are low-volume applications where precision, detail and section size are important and the cost of achieving that is hardly considered. Process variations are suitable for mass production, but only of very small parts. The process is capable of using suitable alloys and heat treatments, but solidification is very slow, microstructures are coarse and properties are achieved only through application of expensive alloy types and/or costly heat treatments. Plaster mold casting is capable of large thin walls but is not suitable for mass production and is too costly for automotive consideration.

Squeeze castings and low pressure permanent mold castings (LPPMs) have been and are still used in many automotive structural applications but are not capable of producing thin section (less than 5-10 mm) other than perhaps in very small parts.

Various precision sand casting processes exist and can be used to make thin walled parts, but larger sand castings are generally limited to sections no less than 4-6 mm.

The invention is based on the object of providing a process of the type mentioned in the introduction, with which process a partially solid (also called semisolid) aluminum alloy melt can be provided continuously in a cost-effective manner and further processed to formed parts, particularly die cast parts or forged parts.

It is a further object of the invention to provide a process for producing formed parts, particularly die cast parts or forged, which are reinforced with nano or micron to multi-micron scale particles and are made of an aluminum alloy, with which process a partially solid aluminum alloy melt can be provided continuously in a cost-effective manner under the action of shearing forces typical of the process with a high dispersion of nano or micron to multi-micron scale particles, particularly nanoparticles, and further processed to formed parts, particularly die cast parts or forged parts.

Metals reinforced with nanoparticles are today typically called nanocomposites and when reinforced with micron to multi-micron scale particles are today typically called metal matrix composites (MMCs).

The object is achieved according to the invention in that the aluminum alloy is exposed to high shearing forces in a mixing and kneading machine, having a housing with a working space, which is surrounded by an inner housing sleeve, and a worm shaft, which rotates about a longitudinal axis and oscillates along the longitudinal axis in the inner housing sleeve and is interrupted circumferentially to create individual kneading blades, with axial passage openings between the kneading blades, and with kneading projections, preferably with a round or polygonal cross section, which project from the inner housing sleeve, protrude into the working space and pass through the axial passage openings, wherein liquid aluminum alloy is fed to the working space at one end of the housing and, at the other end of the housing, is removed from the working space as partially solid aluminum alloy with a predefined solids content and is processed to formed parts, wherein the solids content of the aluminum alloy in the working space is set to the predefined solids content by cooling and heating the working space in a targeted manner. Here, the high shearing forces present in the kneading process in the partially solidified phase state continuously break up dendrites as they form, and this leads to a globular alpha aluminum structure which improves semi solid flow and also the strength and ductility of semi solid formed parts. The high compression forces additionally lead to a greater transfer of heat, which ultimately makes it possible to set the solids content in the aluminum alloy more precisely.

The shearing and kneading action of the mixing and kneading machine according to the invention assures an exceptionally homogeneous chemistry, microstructure and temperature distribution throughout the slurry that is then introduced into a die casting machine or a forging press to make parts. This makes the process of the invention superior to other semi solid process variations.

The process according to the present invention is based on semi solid (partially solid) processing. The benefits of semi solid processing and the advantages that the concept of the process according to the present invention using a mixing and kneading machine has over other semi solid routes are described below.

The benefits of semi solid processing:
1) capable of thin walls 1-2 mm;
2) the alpha phase is globular (versus dendritic in other processes) and already largely solid when cast, thus only the solidification of remaining eutectic is required and the maximum volume fraction of solidification shrinkage that remains to be fed is much smaller (less than half) than that of other casting processes;
3) total porosity is typically less than other casting processes (0.0X% in semi solid processing versus 0.X% in squeeze casting, HVDC and plaster mold casting and X% in HPDC);
4) capable of T5 heat treatment of structural parts without loss of ductility (liquid cast parts typically loose 50% of as-cast ductility in T5 but T5 costs only ∼20% of the typical T6 needed for AlSiMg alloys; and
5) long tool life (2-3 times that of HPDC and HVDC and 4-5 times that of squeeze casting).

The mixing and kneading machine used in the process according to the present invention:
1) provides the most uniform chemistry, microstructure and slurry of all semi solid routes;
2) easily accommodates Magsimal^{®} 59 alloy with no heat treating requirement, but with the possibility of enhanced properties and stability using a simple T5 aging practice;
3) Magsimal^{®} 59 alloy cast in semi solid will not be sensitive to solidification rate as it is in liquid casting processes (dendrite arm spacing - SDAS - is a function of local solidification rates), because the alpha structure is determined in the mixing and kneading machine, it is then the same throughout the resulting casting; and
4) the mixing and kneading machine will also facilitate use of many alloy types, including normally wrought, MMCs and and nanocomposites.

The following table briefly notes the above points.

| **Property** | **A** | **B** | **C** | **D** | **E** | **F** | **G** |
|---|---|---|---|---|---|---|---|
| structural parts | yes | no | yes | yes | yes | yes | Yes |
| thin parts | yes | yes | yes | yes | no | no | Lim |
| heat treatment possible | yes | no | yes | yes | yes | yes | Yes |
| Magsimal^{®} 59 | yes | lim | yes | no | no | no | No |
| wrought alloys | yes | no | no | no | no | no | No |
| nanoparticles | yes | ? | ? | ? | ? | ? | ? |
| adequate structural strength: F temper | yes | no | yes | no | no | no | No |
| T5 temper | yes | no | no | no | no | no | No |
| T6 temper | yes | no | yes | yes | yes | yes | Yes |
| capital cost | high | high | highest | low | high | med | Med |
| tooling cost | low | high | higher | low | highest | med | Med |

| | | | | | | | |
|---|---|---|---|---|---|---|---|
| A: process according to the invention B: HPDC C: HVDC D: plaster mold casting E: squeeze casting F: LPPM G: precision sand casting | | | | | | | |

With the process acccording to the invention denoted as "A" in the above table it is possible to make very thin-walled structural products, i.e., formed parts having at least one dimension greater than 0,5 m, particularly greater than 1 m, and at least one area with a wall thickness of 1 to 4 mm, particularly 1 to 2 mm.

To form a die cast part, the partially solid aluminum alloy is transferred into a filling chamber of a die casting machine and is introduced into a casting mold by means of a piston.

To form a forged part, the partially solid aluminum alloy is transferred into a die of a forging press.

It is expedient that the inner housing sleeve is surrounded by an outer housing sleeve such that an intermediate space preferably in the form of a hollow cylinder is formed, and cold and/or hot gases are conducted through the intermediate space for cooling and heating the working space. As an alternate heating source electric resistance elements might be placed within the intermediate space for heating.

Preferably, the inner housing sleeve and the outer housing sleeve with the intermediate space in the form of a hollow cylinder in between is divided along the circumference in at least two segments and/or is divided along the longitudinal axis in at least two sections, thereby creating individual compartments providing separate heating channels.

Air, preferably compressed air, is preferably conducted through the intermediate space and the segments/ sections, respectively, for cooling, and hot gases are preferably conducted through the intermediate space and the segments/ sections, respectively, for heating, or electric resistance elements are placed within the intermediate space and the segments/ sections, respectively, for heating.

Combustion gases might be an alternative source of hot gases.

The gases are conducted through the intermediate space and the segments/ sections, respectively, in current or countercurrent, preferably in countercurrent, to the direction in which the aluminum alloy is transported.

The solids content of the aluminum alloy is preferably set to 40 to 80%, in particular to 50% or more.

In a preferred embodiment of the process according to the invention, the partially solid aluminum alloy is removed from the working space as a partially solid metal strand. The continuously emerging, partially solid metal strand is split into partially solid metal portions and the partially solid metal portions are processed to formed parts.

In order to produce formed parts reinforced with particles in the nano or micron to multi-micron scale, particles are mixed with the aluminum alloy and finely dispersed in the aluminum alloy by high shearing forces in the mixing and kneading machine, wherein liquid aluminum alloy and particles are fed to the working space at one end of the housing and, at the other end of the housing, are removed from the working space as partially solid aluminum alloy with a predefined solids content and with particles finely dispersed in the aluminum alloy. Here, in addition to the shearing of tender dendrite arms as they form and the resultant higher ductility, the high shearing forces present in the kneading process in the partially solidified phase state breaks up clusters, finely disperses and prevents re-clustering of particles, in particular nanoparticles, which is required for the strength-increasing effect thereof.

The content of the particles in the alloy is preferably between about 0.1 and 10% by weight.

Suitable, cost-effective particles in the nano scale consist preferably of fumed silica, such as e.g. Aerosil^{®}. However, it is also possible to use other nanoparticles, such as e.g. the known carbon nanotubes (CNT) and also further, nano scale particles which are produced, for example, by the known Aerosil^{®} process and are made of metal and semimetal oxides, such as e.g. aluminum oxide (Al₂O₃), titanium dioxide (TiO₂), zirconium oxide (ZrO₂), antimony(III) oxide, chromium(III) oxide, iron(III) oxide, germanium(IV) oxide, vanadium(V) oxide or tungsten(VI) oxide, and nano scale particles of metals dissolving slowly to infinitely slowly in aluminum, such as tungsten, molybdenum and rear earth metals.

Thicker-walled structural parts, such as steering knuckles, control arms, cast wheels, differential carriers, etc. have already been made using semi solid processes, but either squeeze or LPPM or another permanent mold process dominate. These liquid based processes all have varying microstructures and properties depending on section thickness and they are limited regarding alloy selection to those having good fluidity. The semi solid processes are less sensitive to solidification rate and thus have more uniform microstructures and properties throughout. Being formed in die casting type tooling, semi solid parts can be cast with greater detail and much closer to final dimensions than the permanent mold type processes, minimizing material content and producing lighter components. Semi solid slurry produced according to the invention with a mixing and kneading machine is the most uniform in chemistry, microstructure and properties of all casting processes, a distinct advantage when modeling performance and designing structural components of minimum weight.

Successful casting of metal matrix composites, those with added solid second phases such as aluminum oxide and/or silicon carbide, etc., using traditional liquid-metal processes requires stirring to keep the added phases in suspension and evenly distributed. The mixing and kneading machine used in the process according to the invention provides an excellent distribution of solid phases such as particles in the nano or micron to multimicron scale, typically called nanoparticles and MMC particulates. The added phase of MMCs can also serve as part of the solid required to achieve viscous semi solid flow, the balance of the needed solid being alpha aluminum as in other semi solid processes.

Aluminum engine blocks are becoming smaller but with higher specific output -- diesel will dominate for the near future. Higher performing diesels will require greater strength at temperature than current alloys provide and MMCs with particles in the nano or micron to multi-micron scale might be required. Semi solid forming provides the highest quality in combination with maximum complexity and minimum weight and the mixing and kneading machine used in the process according to the invention provide a superior slurry homogeneity for that semi solid forming.

To create components judged too large to fit a die casting type machine, so called ultra-large components, semi solid metal portions from the mixing and kneading machine used in the process according to the invention could be placed at multiple strategic points on a vertical forging type press and the tool closed to rapidly fill the die with short flow distances.

Further advantages, features and details of the invention will become apparent from the following description of preferred exemplary embodiments and with reference to the drawing, which serves merely for elucidation and is not to be interpreted as having a limiting effect. Schematically, in the drawing,
- figure 1: shows a longitudinal section through a die casting machine with an upstream mixing and kneading machine;
- figure 2: shows a longitudinal section through part of a mixing and kneading machine;
- figure 3: shows a cross section through the mixing and kneading machine shown in figure 1;
- figure 4: shows characteristic shearing and stretching flow fields in a product mass, triggered by a kneading blade moving past a kneading bolt;
- figure 5: shows the continuous production of partially solid starting material for die casting with an arrangement according to figure 1;
- figure 6: shows the continuous production of partially solid starting material for die forging.

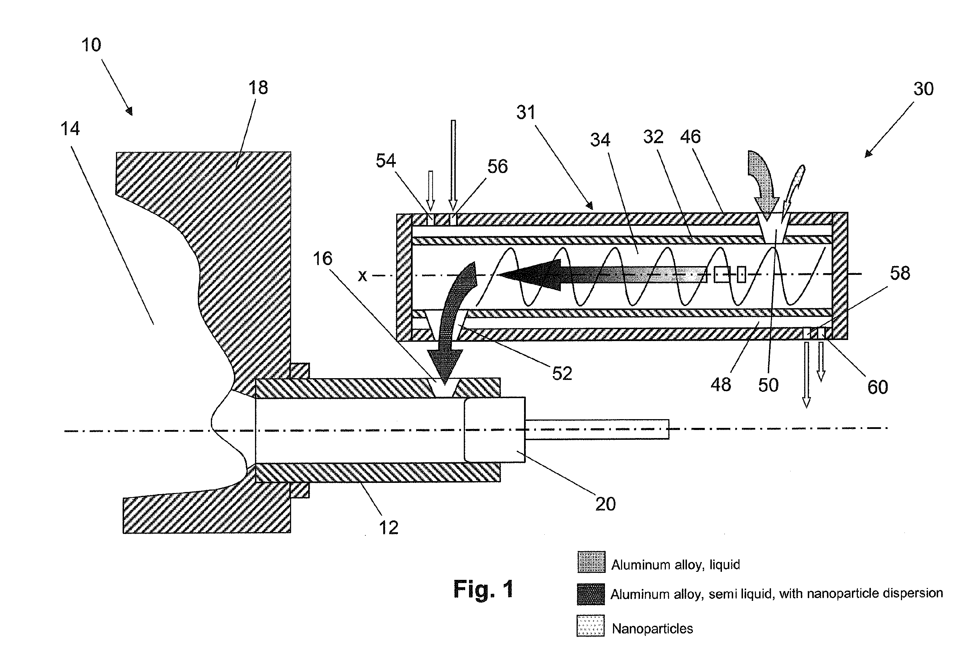

A plant, shown in figure 1, for die casting die cast parts which are optionally reinforced with nanoparticles and are made of an aluminum alloy has a die casting machine 10 and a mixing and kneading machine 30 upstream of the die casting machine 10.

The die casting machine 10, which is shown only in part in the drawing, is a commercially available machine for conventionally die casting aluminum alloys and has, inter alia, a filling chamber 12, which is connected to a stationary side 18 of a casting mold, with an opening 16 for receiving the metal which is to be ejected from the filling chamber 12 and introduced into a mold cavity 14 of the casting mold by means of a piston 20.

Differing from normal machines for conventional die casting, machines for semi solid forming require higher-powered shot end systems.

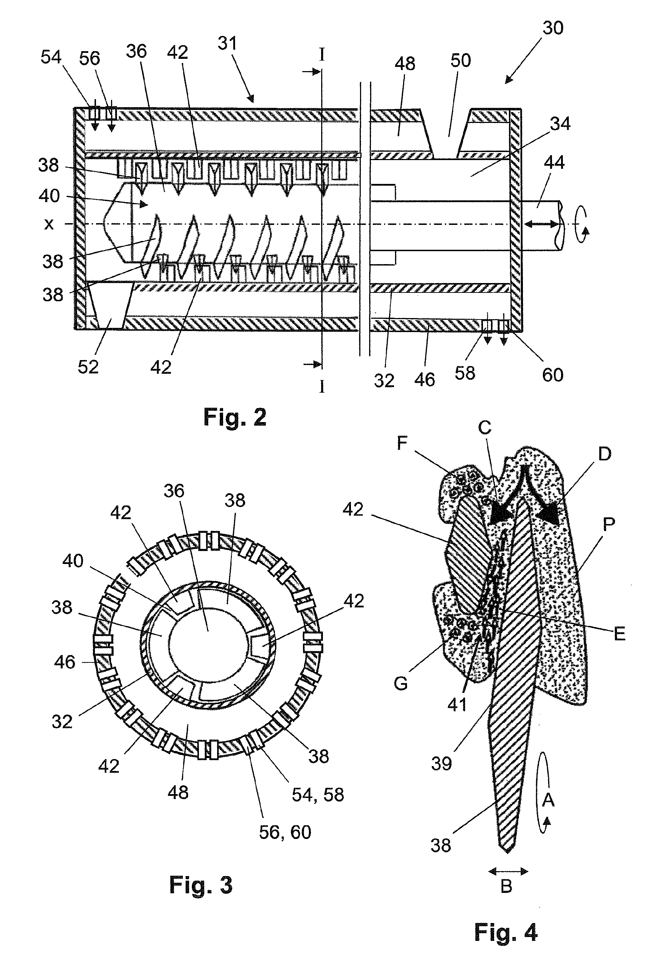

The mixing and kneading machine 30 is shown in detail in figures 2 and 3. The basic design of such a mixing and kneading machine is known, for example, from CH-A-278 575. The mixing and kneading machine 30 has a housing 31 with a working space 34, which is surrounded by an inner housing sleeve 32 and in which there is arranged a worm shaft 36, which rotates about a longitudinal axis x and oscillates along the longitudinal axis x in the inner housing sleeve 32. The worm shaft 36 is interrupted in the circumferential direction such that individual kneading blades 38 are formed. Axial passage openings 40 are thereby formed between the individual kneading blades 38. Kneading projections such as knobs or bolts 42 protrude from the inner side of the inner housing sleeve 32 into the working space 34. The kneading bolts 42 on the housing side pass through the axial passage openings 40 of the kneading blades 38 arranged on the main or worm shaft 36. A drive shaft 44 arranged concentrically to the worm shaft 36 is guided out of the inner housing sleeve 32 at the end and is connected to a drive unit (not shown in the drawing) for executing a rotational movement of the worm shaft 36. A device interacting with the worm shaft 36 for executing the translational movement of the worm shaft 36 is likewise not shown in the drawing.

The cylindrical inner housing sleeve 32 of the mixing and kneading machine 30, which delimits the working space 34, is surrounded by a cylindrical outer housing sleeve 46. The inner housing sleeve 32 and the outer housing sleeve 46 form a dual sleeve and thereby enclose an intermediate space 48 in the form of a hollow cylinder.

An introduction opening 50 for feeding liquid aluminum alloy and optionally nanoparticles into the working space 34 is provided at that end of the housing 31 which is close to the drive side of the worm shaft 36. Although only one introduction opening 50 is shown in the drawing, two separate introduction openings for the aluminum alloy and for the nanoparticles can be provided. In principle, it is also possible to admix the nanoparticles with the liquid aluminum alloy even before the metal is introduced into the kneading and mixing machine 30. An outlet opening 52 for removing partially solid aluminum alloy optionally with nanoparticles dispersed therein is provided at that end of the inner housing sleeve 32 which is remote from the drive side of the worm shaft 36.

Inlet openings 54, 56 for introducing cold or hot gases into the intermediate space 48 are provided in the outer housing sleeve 46 at that end of the housing 31 which is remote from the drive side of the worm shaft 36. Correspondingly, outlet openings 58, 60 for the discharge of the gases from the intermediate space 48 are provided at that end of the housing 31 which is close to the drive side of the worm shaft 36. In order to ensure a maximum throughflow of gas, which is distributed uniformly over the circumference of the inner housing sleeve 32, from the inlet openings 54, 56 to the outlet openings 58, 60, and thus a uniform discharge of heat from the working space 34 or a uniform introduction of heat into the working space 34, the inlet and outlet openings 54, 56 and 58, 60, respectively, are according to figure 3 arranged distributed uniformly about the circumference of the outer housing sleeve 46.

In an alternative embodiment, the inner housing sleeve 32 and the outer housing sleeve 46 with the intermediate space 48 in the form of a hollow cylinder in between is divided along the circumference in at least two segments and/or is divided along the longitudinal axis in at least two sections. For example, the inner housing sleeve 32 and the outer housing sleeve 46 with the intermediate space 48 in the form of a hollow cylinder in between may be divided along the circumference in four (4) segments and along the longitudinal axis in three (3) sections, thereby creating twelve (12) individual compartments providing separate heating channels.

Figure 4 shows, in a schematic illustration, characteristic shearing and stretching flow fields in a product mass P, as triggered by a kneading blade 38 moving past a kneading bolt 42 in the case of a mixing and kneading machine 30 formed according to the prior art. The direction in which the kneading blade 38 rotates is indicated schematically by a curved arrow A, whereas the translational movement of the kneading blade 38 is indicated by a double-headed arrow B. The rotational movement of the kneading blade 38 means that its tip splits the product mass P, as indicated by arrows C, D. There is a gap 41, the width of which varies depending on the rotation and translational movement of the worm shaft 36, between the kneading bolt 42 and the main face 39 of the kneading blade 38, which faces toward the kneading bolt 42, and the kneading blade 38 moving past the latter. A shearing process is brought about in the product mass P in this gap 41, as indicated by arrow E. The product mass P expands and reorientates itself both upstream and downstream of the kneading bolt 42, as indicated by rotation arrows F, G. As already mentioned in the introduction, there is a maximum convergence of the kneading blade 38 and the kneading bolt 42 and thus a maximum shearing rate in the product mass P per shearing cycle owing to the sinusoidal axial movement of the respective kneading blade 38 on a line.

In the text which follows, the mode of operation of the plant for die casting die cast parts which are optionally reinforced with nanoparticles and are made of an aluminum alloy is explained in more detail, by way of example, with reference to figures 1 and 2.

An aluminum alloy melt kept just above the liquidus temperature of the alloy is fed to the working space 34 in metered form alone or together with nanoparticles via the introduction opening 50. The pinching of the partially solidified aluminum alloy with nanoparticles between the kneading blades 38 and the kneading bolts 42 results in the application of high shearing forces, which both lead to the shearing of tender dendrite arms as they form and finely disperse the nanoparticles present in the form of agglomerates. Efficient, homogenizing mixing results from the combination of a radial and longitudinal mixing effect. By controlling the flow of cold and hot gases through the intermediate space 48 between the inner housing sleeve 31 and the outer housing sleeve 46, the solids content of the aluminum alloy in the working space 34 is set such that it is in the desired range when the metal is removed through the outlet opening 52.

The desired solids content of the aluminum alloy is set by measuring the change in viscosity of the metal melt in the kneading and mixing machine 30. The viscosity, which rises as the solids content of the partially solid aluminum alloy increases, can be determined, for example, by measuring the rotational resistance at the drive shaft 44 of the worm shaft 36. By determining the rotational resistance for defined solids contents, it is possible to specify appropriate setpoint values, to which measured actual values are regulated by controlling the flow of cold and hot gases through the intermediate space 48 between the inner housing sleeve 32 and the outer housing sleeve 46.

The aluminum alloy having the desired solids content and optionally comprising finely dispersed nanoparticles is introduced via the introduction opening 16 into the filling chamber 12 of the die casting machine 10, and is injected intermittently from the latter into the mold cavity 14 of the casting mold from the filling chamber 12 in a known manner by means of the piston 20.

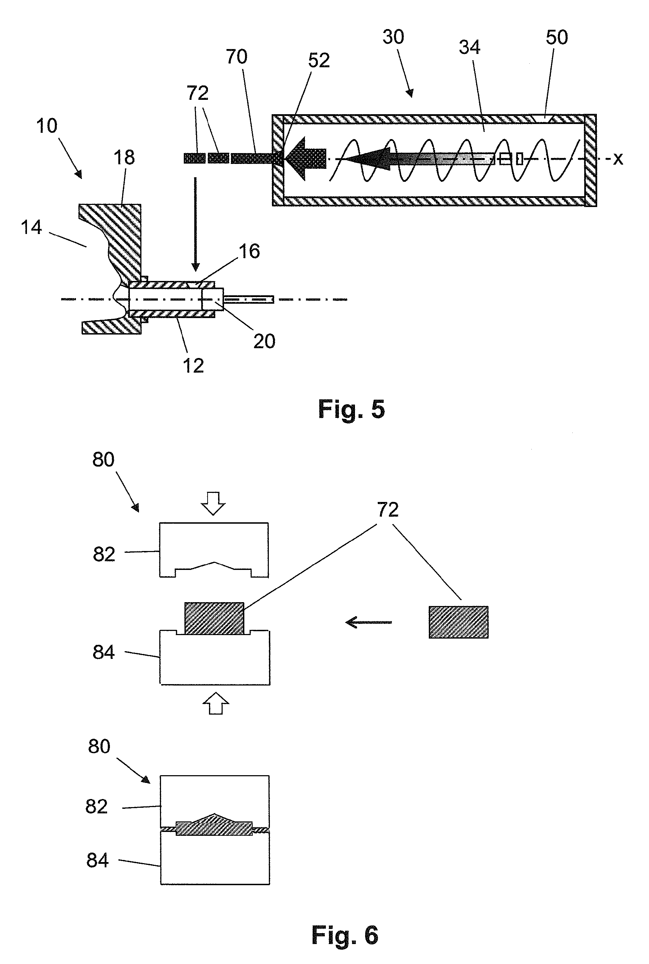

With reference to figure 5, the text which follows provides a more detailed explanation, by way of example, of the continuous production of partially solid, bar-shaped starting material for die casting die cast parts which are optionally reinforced with nanoparticles and are made of an aluminum alloy. The mode of operation explained above with reference to figures 1 and 2 is retained.

The aluminum alloy having the desired solids content and optionally comprising finely dispersed nanoparticles is continuously ejected via the outlet opening 52 in the form of a partially solid metal strand 70. Partially solid metal portions 72 are cut to length from the partially solid metal strand 70 with a simple knife action. The partially solid metal portions 72 usually each correspond to the quantity of metal required for producing an individual die cast part and, for each shot, are transferred individually into the filling chamber 12 of the die casting machine 10 and injected intermittently from the latter into the mold cavity 14 of the casting mold from the filling chamber 12 in a known manner by means of the piston 20.

In figure 6 the partially solid metal portions 72 of figure 5 are transferred to a forging press 80 and individually processed to a forged part between upper and a lower forging dies 82, 84.

The partially solid metal strand 70 usually leaves the mixing and kneading machine 30 in the direction of the longitudinal axis x of the worm shaft 36 in a horizontal direction, although another, e.g. vertical, outlet direction is also conceivable. The cross section of the metal strand 70 is determined by the cross section of the outlet opening 52, and is usually circular. The partially solid metal portions 72 can be grasped by tongs, for example, and transferred into the filling chamber 12 of the die casting machine 10 or into the forging die 82, 84 of the forging press 80.

## Claims

1. A process for producing formed parts made of an aluminum alloy, in which process the aluminum alloy is exposed to high shearing forces in a mixing and kneading machine (30), having a housing (31) with a working space (34), which is surrounded by an inner housing sleeve (32), and a worm shaft (36), which rotates about a longitudinal axis (x) and oscillates along the longitudinal axis (x) in the inner housing sleeve (32) and is interrupted circumferentially to create individual kneading blades (38), with axial passage openings (40) between the kneading blades (38), and with kneading projections (42), which project from the inner housing sleeve (32), protrude into the working space (34) and pass through the axial passage openings (40), wherein liquid aluminum alloy is fed to the working space (34) at one end of the housing (31) and, at the other end of the housing (31), is removed from the working space (34) as partially solid aluminum alloy with a predefined solids content and is processed to formed parts, wherein the solids content of the aluminum alloy in the working space (34) is set to the predefined solids content by cooling and heating the working space (34) in a targeted manner.

2. The process as claimed in claim 1, wherein the formed parts have at least one dimension greater than 0,5 m, particularly greater than 1 m, and at least one area with a wall thickness of 1 to 4 mm, particularly 1 to 2 mm.

3. The process as claimed in claim 1, wherein the partially solid aluminum alloy is transferred into a filling chamber (12) of a die casting machine (10) and is introduced into a casting mold by means of a piston (20) to form a die cast part.

4. The process as claimed in claim 1, wherein the partially solid aluminum alloy is transferred into a die (82, 84) of a forging press (80) to form a forged part.

5. The process as claimed in claim 1, wherein the inner housing sleeve (32) is surrounded by an outer housing sleeve (46) such that an intermediate space (48) preferably in the form of a hollow cylinder is formed, and cold and/or hot gases are conducted through the intermediate space (48) for cooling and heating the working space (34).

6. The process as claimed in claim 5, wherein the inner housing sleeve (32) and the outer housing sleeve (46) with the intermediate space (48) in the form of a hollow cylinder in between is divided along the circumference in at least two segments and/or is divided along the longitudinal axis in at least two sections, thereby creating individual compartments providing separate heating channels.

7. The process as claimed in claim 5 or 6, wherein air, preferably compressed air, is conducted through the intermediate space (48) and the segments/ sections, respectively, for cooling, and hot gases are conducted through the intermediate space (48) and the segments/ sections, respectively, or electric resistance elements are placed within the intermediate space (48) and the segments/ sections, respectively, for heating.

8. The process as claimed in claim 7, wherein the gases are conducted through the intermediate space (48) and the segments/ sections, respectively, in current or countercurrent, preferably in countercurrent, to the direction in which the aluminum alloy is transported.

9. The process as claimed in one of claims 1 to 8, wherein, in order to set a desired solids content, the viscosity of the aluminum alloy in the working space (32) is measured and set to a predefined value by cooling and heating the working space (34) in a targeted manner.

10. The process as claimed in one of claims 1 to 9, wherein the solids content of the aluminum alloy is set to 40 to 80%, preferably to 50% or more.

11. The process as claimed in one of claims 1 to 10, wherein the partially solid aluminum alloy is removed from the working space (34) as a partially solid metal strand (70), the partially solid metal strand (70) is split into partially solid metal portions (72) and the partially solid metal portions (72) are transferred into the filling chamber (12) of the die casting machine (10).

12. The process as claimed in one of claims 1 to 11, wherein, in order to produce formed parts reinforced with particles in the nano or micron to multi-micron scale, particles are mixed with the aluminum alloy and finely dispersed in the aluminum alloy by high shearing forces in the mixing and kneading machine (30), wherein liquid aluminum alloy and particles are fed to the working space (34) at one end of the housing (31) and, at the other end of the housing (31), are removed from the working space (34) as partially solid aluminum alloy with a predefined solids content and with particles finely dispersed in the aluminum alloy.

13. The process as claimed in claim 12, wherein the content of the particles in the alloy is 0.1 to 10% by volume.

14. The process as claimed in claim 13, wherein the particles in the nano scale used are fumed silica, carbon nanotubes (CNT) and also further, nano scale particles of metal and semimetal oxides, such as e.g. aluminum oxide (Al₂O₃), titanium dioxide (TiO₂), zirconium oxide (ZrO₂) antimony(III) oxide, chromium(III) oxide, iron(III) oxide, germanium(IV) oxide, vanadium(V) oxide or tungsten(VI) oxide, and nano scale particles of metals dissolving slowly to infinitely slowly in aluminum, such as tungsten, molybdenum and rear earth metals.

15. The process as claimed in claim 13, wherein the particles in the micron to multi-micron scale used are particles of metal and semimetal oxides, carbides, borides or nitrides such as e.g. aluminum oxide (Al₂O₃), titanium dioxide (TiO₂), zirconium oxide (ZrO₂), antimony(III) oxide, chromium(III) oxide, iron(III) oxide, germanium(IV) oxide, vanadium(V) oxide or tungsten(VI) oxide, silicon carbide, tungsten carbide, nickel boride, titanium boride and tungsten carbide, and nano scale particles of metals dissolving slowly to infinitely slowly in aluminum, such as tungsten, molybdenum and rear earth metals.

16. Formed parts made with the process as claimed in anyone of the preceding claims.
